# EUROPÄISCHE PATENTSCHRIFT

(11) **EP 4 058 255 B1**
(45) Veröffentlichungstag und Bekanntmachung des Hinweises auf die Patenterteilung: **17.12.2025**
(21) Anmeldenummer: 20808054.9
(22) Anmeldetag: 13.11.2020
(51) Int. Cl.: B25J 15/06, B25J 15/00, B25J 15/04, B25J 9/10

(54) **GREIFVORRICHTUNG FÜR EINEN ROBOTERGREIFER UND VERFAHREN ZUM BETREIBEN EINER GREIFVORRICHTUNG**
GRIPPER DEVICE FOR A ROBOT GRIPPER AND METHOD FOR OPERATING A GRIPPER DEVICE
DISPOSITIF PRÉHENSEUR POUR UN PRÉHENSEUR DE ROBOT ET PROCÉDÉ PERMETTANT DE FAIRE FONCTIONNER UN DISPOSITIF PRÉHENSEUR

(30) Priorität: 13.11.2019 DE 102019130648
(43) Veröffentlichungstag der Anmeldung: 21.09.2022
(73) Patentinhaber: Deutsches Zentrum für Luft- und Raumfahrt e.V., 53227 Bonn (DE)
(72) Erfinder: WEITSCHAT, Roman, 82234 Weßling (DE); GÖRNER, Martin, 81667 München (DE)
(74) Vertreter: Ege Lee & Roider Patentanwälte
(86) Internationale Anmeldenummer: PCT/EP2020/082165
(87) Internationale Veröffentlichungsnummer: WO 2021/094599

(56) Entgegenhaltungen:
- EP-A1- 3 150 342
- JP-A- 2013 091 121
- JP-A- H03 294 195
- JP-A- H04 348 891
- US-A- 3 771 825

## Beschreibung

### Beschreibung

Die Erfindung betrifft Greifvorrichtungen für einen Robotergreifer mit wenigstens zwei in einer Greifer-Öffnungs-/Schließrichtung relativ zueinander verlagerbaren Greifabschnitten. Außerdem betrifft die Erfindung ein Verfahren zum Betreiben einer Greifvorrichtung.

Aus dem Dokument DE 10 2019 125 439 A1 ist eine Greiferbacke bekannt für einen Robotergreifer, wobei die Greiferbacke eine erste mit dem Robotergreifer korrespondierende Greiferbackenschnittstelle und eine zweite mit Werkzeugen eines Werkzeugsatzes korrespondierende Greiferbackenschnittstelle aufweist und die Greiferbackenschnittstellen jeweils als mechanische Schnittstelle, als Signalschnittstelle und/oder als Leistungsschnittstelle dienen.

Das Dokument DD 239 156 A1 betrifft einen Vakuumheber zum Anheben und Manipulieren von Werkstücken. Der Vakuumheber weist ein Gehäuse, eine Aufnahmefläche, Betätigungsglieder und ein Vakuum unmittelbar erzeugendes Element auf. Die Betätigungsglieder sind innerhalb des Gehäuses winklig oder axial zur Aufnahmefläche angeordnet und an Greiferbacken eines Greifers eines Industrieroboters angepasst. Als Betätigungsglieder dienen beispielsweise Gleitstücke, die über Kniehebel mit einer Hubstange verbunden sind, oder dient beispielsweise ein Querbolzen, der direkt mit der Hubstange verbunden ist. Die Hubstange gehört zu dem Vakuum erzeugenden Element, das als Membrane oder ähnliches Element ausgeführt ist. Der Vakuumheber kann unmittelbar mithilfe des Greifers eines Industrie-Roboters aufgenommen und betätigt werden.

Das Dokument US 3 771 825 A betrifft einen Greifmechanismus zum Handhaben eines plattenförmigen Materials mittels eines Manipulators. Das Greifmechanismus aus dem Dokument US 3 771 825 A weist zwei Hebel auf, die an ihren freien Enden mit Greifplatten versehen sind. Die Hebel sind durch Stifte drehbar an einem Maschinenkörper befestigt. Die Hebel weisen jeweils einen Schlitz auf, der gleitend mit einem Stift an einer Stange befestigten Stift verbunden ist. Diese Stangen sind gleitend in ein Paar Hydraulikzylinder eingesetzt und können durch den hydraulischen Druck bewegt werden.

Das Dokument JP H03 294195 A betrifft eine Fingerwechselvorrichtung zum lösbaren Befestigen eines Fingerelements an einem Fingerbefestigungskörper und zum Auswechseln des Fingergliedes. Die Fingerwechselvorrichtung umfasst einen Fingerbefestigungskörper, ein Fingerelement und einen Fingerbefestigungskörper. Der Fingerbefestigungskörper ist U-förmig ausgeführt und weist an seiner unteren Oberfläche eine offene Aussparung auf. Das Fingerelement ist abnehmbar in einem Zustand befestigt, in dem der Fingerbefestigungskörper innerhalb der Aussparung angeordnet ist. Der Fingerbefestigungskörper enthält das Fingerelement. Um eine zum Wechseln eines Fingerelements erforderliche Zeit zu verkürzen, sind dem Dokument JP H03 294195 A zufolge ein mechanisches Klemmmittel und ein Saugklemmmittel bereitgestellt, die das Fingerelement an dem Fingerbefestigungskörper befestigen.

Das Dokument JP 2013 091121 A offenbart ein austauschbares Greifbackenmodul für einen Robotergreifer.

Der Erfindung liegt die Aufgabe zugrunde, eine eingangs genannte Greifvorrichtung strukturell und/oder funktionell zu verbessern. Außerdem liegt der Erfindung die Aufgabe zugrunde, ein eingangs genanntes Verfahren zu verbessern.

Die Aufgabe wird gelöst mit einer Greifvorrichtung mit den Merkmalen des Anspruchs 1. Außerdem wird die Aufgabe gelöst mit einer Greifvorrichtung mit den Merkmalen des Anspruchs 6. Außerdem wird die Aufgabe gelöst mit einem Verfahren zum Betreiben einer Greifvorrichtung mit den Merkmalen des Anspruchs Auf die Mitteilung nach Regel 161 (1) EPÜ 13. Vorteilhafte Ausführungen und/oder Weiterbildungen sind Gegenstand der abhängigen Ansprüche.

Die Greifvorrichtung kann zur Anordnung an einem Robotergreifer dienen. Die Greifvorrichtung mithilfe eines Robotergreifers betätigbar sein. Der Robotergreifer kann als Effektor eines Roboters dienen. Der Robotergreifer kann eine mechanischer Robotergreifer sein. Der Robotergreifer weist wenigstens zwei in einer Greifer-Öffnungs-/Schließrichtung relativ zueinander verlagerbare Greifabschnitte auf. Die Greifabschnitte können zueinander parallel, insbesondere koaxial, linear verlagerbar sein. Die Greifabschnitte dienen dazu, die Kontaktelemente der Greifvorrichtung mit einer Betätigungsbewegung und/oder Betätigungskraft zu beaufschlagen. Die Greifabschnitte können dazu dienen, die Greifvorrichtung aufzunehmen, zu betätigen und/oder abzulegen. Der Robotergreifer kann ein Fingergreifer sein. Der Robotergreifer kann ein Zweifinger- oder Mehrfingergreifer sein. Der Robotergreifer kann ein starr, starr-gelenkig oder elastisch ausgeführt sein. Der Robotergreifer kann mechanisch, pneumatisch oder elektrisch angetrieben sein. Die Greifvorrichtung kann zum Aufnehmen, Halten und/oder Ablegen von Greifobjekten dienen.

Die mechanische Betätigung kann zum Betätigen der Greifvorrichtung dienen. Die mechanische Betätigung kann zum Betätigen der Greifvorrichtung mithilfe eines Robotergreifers dienen. Die mechanische Betätigung kann zum Anordnen der Greifvorrichtung an einem Robotergreifer dienen. Die mechanische Betätigung kann zweiseitig betätigbar sein. Die mechanische Betätigung kann bei Betätigung zentrierend sein. Die mechanische Betätigung kann bei Betätigung selbsttätig zentrierend sein. Die mechanische Betätigung kann zur Betätigung in einer Betätigungsrichtung dienen. Die Betätigungsrichtung kann einer Greifer-Öffnungs-/Schließrichtung entsprechen.

Die Greifvorrichtung kann eine Basis aufweisen. Die Greifvorrichtung kann ein erstes Abstützelement und ein zweites Abstützelement aufweisen. Das erste Abstützelement und das zweite Abstützelement können relativ zueinander verlagerbar sein. Das erste Abstützelement und das zweite Abstützelement können zueinander hin und voneinander weg verlagerbar sein. Das erste Abstützelement kann als Basis dienen. Das zweite Abstützelement kann als Hubelement dienen.

Die Greifvorrichtung kann wenigstens zwei Hebel aufweisen. Die wenigstens zwei Hebel können jeweils zwischen dem ersten Abstützelement und dem zweiten Abstützelement wirksam sein. Die wenigstens zwei Hebel können jeweils verschwenkbar gelagert sein. Die wenigstens zwei Hebel können jeweils an dem ersten Abstützelement fest oder lose gelagert sein. Die wenigstens zwei Hebel können jeweils an dem ersten Abstützelement lediglich abstützend gelagert sein. Die wenigstens zwei Hebel können jeweils an dem zweiten Abstützelement fest gelagert sein. Die wenigstens zwei Hebel können jeweils an dem zweiten Abstützelement mithilfe eines Lagerstifts gelagert sein. Die wenigstens zwei Hebel können jeweils einteilig ausgeführt sein. Die wenigstens zwei Hebel können jeweils als Winkelhebel ausgeführt sein. Die wenigstens zwei Hebel können jeweils zwei Enden aufweisen. Die wenigstens zwei Hebel können jeweils einen Winkelabschnitt aufweisen. Die wenigstens zwei Hebel können jeweils stabförmig oder bogenförmig ausgeführt sein. Die wenigstens zwei Hebel können jeweils mehrteilig ausgeführt sein. Die wenigstens zwei Hebel können jeweils als Kniehebel ausgeführt sein. Die wenigstens zwei Hebel können jeweils zwei miteinander drehgelenkig verbundene Schenkel aufweisen.

Die wenigstens zwei Hebel können jeweils unmittelbar an dem ersten Abstützelement abgestützt sein. Die wenigstens zwei Hebel können jeweils unmittelbar an dem zweiten Abstützelement abgestützt sein. Die wenigstens zwei Hebel können mit dem zweiten Abstützelement jeweils mit einem Freiheitsgrad f=2 gelenkig verbunden sein. Die wenigstens zwei Hebel können jeweils an dem zweiten Abstützelement einseitig anliegend sein. Die wenigstens zwei Hebel können Wirkabschnitte aufweisen. Die Wirkabschnitte können bei Betätigung zentrierend sein. Die Wirkabschnitte können bei Betätigung selbsttätig zentrierend sein.

Die Betätigung kann mit dem Robotergreifer kraft- und/oder formschlüssig korrespondieren. Die Betätigung kann mit dem Robotergreifer geometrisch komplementär korrespondieren. Die wenigstens zwei Kontaktelemente können zumindest annähernd parallele Kontaktflächen aufweisen. Die wenigstens zwei Kontaktelemente können mit ihren Kontaktflächen parallel geführt sein. Die wenigstens zwei Kontaktelemente können koaxial geführt sein. Die wenigstens zwei Kontaktelemente können an dem ersten Abstützelement geführt sein. Die wenigstens zwei Kontaktelemente können in Betätigungsrichtung geführt sein. Das erste Abstützelement kann eine Linearführung für die wenigstens zwei Kontaktelemente aufweisen.

Die Kontaktelement können jeweils an einem Ende eines Hebels angeordnet sein. Die wenigstens zwei Kontaktelemente einerseits und die wenigstens zwei Hebel andererseits können jeweils miteinander mithilfe eines Drehschubgelenks verbunden sein.

Der Wirkabschnitt kann dazu dienen, mit Greifobjekten eine Wirkpaarung zu bilden. Der Wirkabschnitt kann durch mechanische Betätigung der Greifvorrichtung aktivierbar und/oder deaktivierbar sein. Der Wirkabschnitt kann durch eine Aktivierungs-/Deaktivierungsbewegung aktivierbar und/oder deaktivierbar sein. Die Aktivierungs-/Deaktivierungsbewegung kann eine lineare Bewegung sein. Die Aktivierungs-/Deaktivierungsbewegung kann eine rotatorische Bewegung verlaufen. Eine Aktivierungs-/Deaktivierungsbewegung kann in einer Aktivierungs-/Deaktivierungsrichtung erfolgen. Eine Aktivierungs-/Deaktivierungsrichtung kann senkrecht zu einer Betätigungsrichtung sein. Eine Aktivierungs-/Deaktivierungsbewegung kann um eine Aktivierungs-/Deaktivierungsachse erfolgen. Eine Aktivierungs-/Deaktivierungsachse kann senkrecht zu einer Betätigungsrichtung verlaufen. Der wenigstens eine Wirkabschnitt kann mechanisch formschlüssig, mechanisch kraftschlüssig, pneumatisch, magnetisch und/oder adhäsiv wirksam sein. Der wenigstens eine Wirkabschnitt kann eine Magnetanordnung mit wenigstens einem Permanentmagnet, wenigstens einen Abstreifer, wenigstens ein Elastikelement und/oder wenigstens ein Saugelement aufweisen. Mehrere Permanentmagnete können stapelförmig angeordnet sein. Der wenigstens eine Abstreifer kann eine ebene Unterseite aufweisen. Der wenigstens eine Abstreifer kann wenigstens eine Öffnung für den wenigstens einen Permanentmagnet aufweisen. Der wenigstens eine Permanentmagnet kann durch Betätigen der Greifvorrichtung zwischen einer Aktivposition und/oder einer Deaktivposition verstellbar sein. Der wenigstens eine Permanentmagnet kann durch Anheben und/oder Absenken zwischen einer Aktivposition und/oder einer Deaktivposition verstellbar sein. Der wenigstens eine Permanentmagnet kann durch Verdrehen zwischen einer Aktivposition und/oder einer Deaktivposition verstellbar sein. Das wenigstens eine Elastikelement kann Silikon aufweisen. Das wenigstens eine Elastikelement kann durch Betätigen der Greifvorrichtung verformbar sein. Das wenigstens eine Saugelement kann einen Saugnapf aufweisen. Das wenigstens eine Saugelement kann durch Betätigen der Greifvorrichtung evakuierbar sein. Der wenigstens eine Wirkabschnitt kann als Schneidzange, Spritze, Nietwerkzeuge, oder Sicherheitsschneidwerkzeug, das erst in einem sicheren Bereich ausfährt, ausgeführt sein. Die Greifvorrichtung kann als Flächengreifer, als Einzelgreifer, als Innengreifer, als Außengreifer oder als Flaschengreifer ausgeführt sein.

Das Getriebe kann zum Wandeln einer Betätigungsbewegung in eine Aktivierungs-/Deaktivierungsbewegung dienen. Das Getriebe kann zum Wandeln einer linearen Bewegung in Betätigungsrichtung in eine lineare Bewegung in Aktivierungs-/Deaktivierungsrichtung dienen. Das Getriebe kann zum Wandeln einer linearen Bewegung in Betätigungsrichtung in eine rotatorische Aktivierungs-/Deaktivierungsbewegung dienen. Das Getriebe kann zum Wandeln einer parallelen Bewegung in eine Bewegung zum aktivieren und/oder deaktivieren des wenigstens einen Wirkabschnitts dienen. Das Getriebe kann zum Wandeln einer parallelen Bewegung in eine Bewegung des ersten Abstützelements und des zweiten Abstützelements relativ zueinander dienen. Das Getriebe kann zum Wandeln einer parallelen Bewegung in eine Bewegung des wenigstens einen Permanentmagnets, in eine Bewegung des wenigstens einen Abstreifers, in eine Verformung des wenigstens ein Elastikelements und/oder in eine Evakuierung des wenigstens ein Saugelements dienen. Das Getriebe kann selbsthemmend sein. Das Getriebe kann bei aktiviertem Wirkabschnitt selbsthemmend sein.

Die Welle kann an der Basis gelagert sein. Das Getriebe kann an der Welle angeordnete Kurbeln aufweisen. Das Getriebe kann mit den Kurbeln gelenkig verbundene Koppelglieder aufweisen. Die Koppelglieder können jeweils einerseits mit einer Kurbel und andererseits mit einem Kontaktelement gelenkig verbunden sein. Die Koppelglieder können jeweils einerseits mit einer Kurbel und andererseits mit einem Hebel gelenkig verbunden sein. Die Koppelglieder können bogenförmig sein.

Das Getriebe kann wenigstens eine Verzahnung aufweisen. Das Getriebe kann ein Zahnrad und wenigstens eine Zahnstange aufweisen. Das Getriebe kann wenigstens zwei Zahnstangen aufweisen. Das Zahnrad kann an der Welle angeordnet sein. Die wenigstens zwei Zahnstangen können den wenigstens zwei Kontaktelementen zugeordnet sein.

Die Greifvorrichtung kann eine Federvorrichtung aufweisen. Die Federvorrichtung kann dazu dienen, den wenigstens einen Wirkabschnitt entgegen einer Betätigungskraft zu beaufschlagen. Die Federvorrichtung kann dazu dienen, den wenigstens einen Wirkabschnitt in Richtung einer Deaktivierung zu beaufschlagen. Die Federvorrichtung kann zwischen dem ersten Abstützelement und dem zweiten Abstützelement wirksam sein. Die Federvorrichtung kann wenigsten eine Federelement aufweisen. Das wenigstens eine Federelement kann Gummi, Silikon oder eine Metallfeder aufweisen.

Zum Greifen eines Greifobjekts kann ein Robotergreifer die Greifvorrichtung an der Betätigung greifen und die Greifvorrichtung mit ihrem wenigstens einen Wirkabschnitt mit einem Greifobjekt in Wirkkontakt bringen. Dann können die Kontaktelemente mithilfe des Robotergreifers zueinander hin beaufschlagt werden. Dabei können die Hebel verschwenken, das erste Abstützelement und das zweite Abstützelement voneinander weg beaufschlagen und den wenigstens einen Wirkabschnitt aktivieren. Beim Deaktivieren des wenigstens einen Wirkabschnitts können das erste Abstützelement und das zweite Abstützelement wieder zueinander hin bewegt werden, gegebenenfalls bewirkt oder unterstützt durch die Federvorrichtung.

Anhand einer Betätigungskraft kann ein Greifzustand beurteilt werden. Anhand der Betätigungskraft kann beurteilt werden, ob ein Greifobjekt sicher gegriffen ist oder ein Fehlgriff vorliegt.

Zusammenfassend und mit anderen Worten dargestellt ergibt sich somit durch die Erfindung unter anderem ein roboteraktuierter Mechanismus zum Aktuieren von Robotermanipulatoren und Verfahren zum Betreiben eines solchen.

Ein mechanisch aktuiertes Greiferwerkzeug kann mithilfe eines Zwei-Finger-Parallel-Robotergreifers aktuiert werden, um damit eine Aufgabe, wie Sauggreifen, Magnetgreifen, Pipettenaufgaben, uvm. durchzuführen. Eine doppelseitig aktuierte Mechanik kann mit gleichmäßiger Kraftübertragung durch den Robotergreifer zentrierbar sein. Eine singuläre Stellung kann durch weites Auslenken des Hebels (90°) ermöglicht sein. Somit kann beispielsweise eine Saugkraft erhalten bleiben, ohne dass durch den Greifer weiter Kraft eingeleitet werden muss. Über die Greifkraft kann ein sicheres Greifen mit dem Werkzeug detektierbar oder ein Fehlgriff identifizierbar sein.

Mit der Erfindung wird eine Flexibilität und/oder eine Effektivität gesteigert. Verspannungen werden vermieden. Ein Betätigungskraftaufwand wird reduziert. Ausgehend von einem Grundmodul wird eine Individualisierung oder Anpassung ermöglicht. Ein Aufwand, wie Kostenaufwand, wird reduziert. Die Erfindung kann insbesondere in sämtlichen industriellen Bereichen, in der Logistik- und der Verpackungsindustrie und/oder in der kollaborierenden Robotik eingesetzt werden.

Nachfolgend werden Ausführungsbeispiele der Erfindung unter Bezugnahme auf Figuren näher beschrieben, dabei zeigen schematisch und beispielhaft:
- Fig. 1: eine magnetisch wirksame Greifvorrichtung für einen Robotergreifer Schnittansicht von vorne,
- Fig. 2: eine magnetisch wirksame Greifvorrichtung für einen Robotergreifer in Schnittansicht von hinten,
- Fig. 3: eine als Innengreifer ausgeführte Greifvorrichtung für einen Robotergreifer mit einem deaktivierten elastischen Wirkabschnitt,
- Fig. 4: eine als Innengreifer ausgeführte Greifvorrichtung für einen Robotergreifer mit einem aktivierten elastischen Wirkabschnitt,
- Fig. 5: einen Robotergreifer und eine als Flächengreifer mit Saugelementen ausgeführte Greifvorrichtung in Ansicht von oben,
- Fig. 6: einen Robotergreifer und eine als Flächengreifer mit Saugelementen ausgeführte Greifvorrichtung in Ansicht von unten,
- Fig. 7: eine als Saugheber ausgeführte Greifvorrichtung für einen Robotergreifer mit deaktiviertem Wirkabschnitt,
- Fig. 8: eine als Saugheber ausgeführte Greifvorrichtung für einen Robotergreifer mit aktiviertem Wirkabschnitt,
- Fig. 9: eine als Saugheber ausgeführte Greifvorrichtung für einen Robotergreifer mit deaktiviertem Wirkabschnitt in Schnittansicht,
- Fig. 10: eine als Saugheber ausgeführte Greifvorrichtung für einen Robotergreifer mit aktiviertem Wirkabschnitt in Schnittansicht,
- Fig. 11: eine als Saugheber ausgeführte Greifvorrichtung für einen Robotergreifer mit deaktiviertem Wirkabschnitt in Schnittansicht,
- Fig. 12: eine als Saugheber ausgeführte Greifvorrichtung für einen Robotergreifer mit aktiviertem Wirkabschnitt in Schnittansicht,
- Fig. 13: einen Roboter mit einem Robotergreifer und einer als Saugheber ausgeführte Greifvorrichtung,
- Fig. 14: eine Greifvorrichtung mit zwei als Kniehebel ausgeführten Hebeln,
- Fig. 15: eine Greifvorrichtung mit einer Welle, Kurbeln und Koppelgliedern,
- Fig. 16: eine Greifvorrichtung mit einer Welle und Verzahnung,
- Fig. 17: eine Greifvorrichtung mit einer Welle, Kurbeln, Koppelgliedern und Hebeln,
- Fig. 18: eine Greifvorrichtung mit einer verdrehbaren Magnetanordnung in Deaktivposition und
- Fig. 19: eine Greifvorrichtung mit einer verdrehbaren Magnetanordnung in Aktivposition.

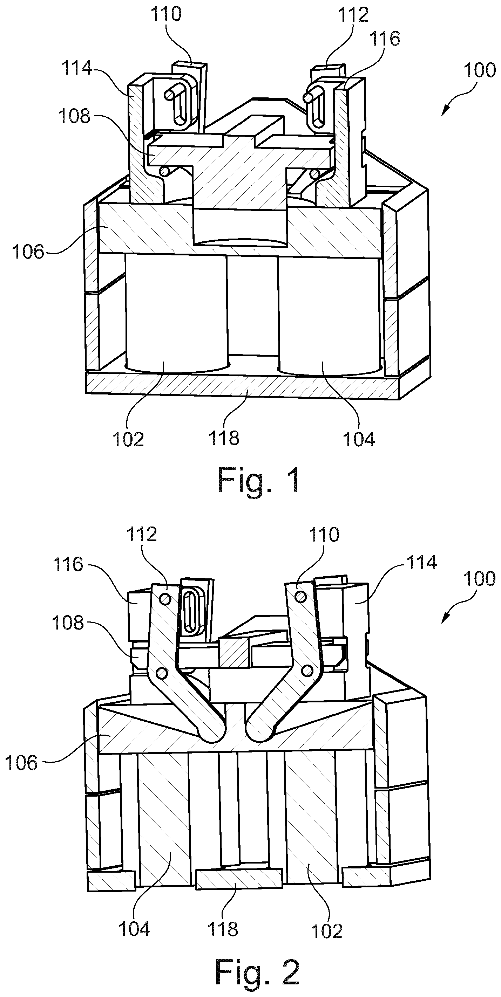

Fig. 1 zeigt eine magnetisch wirksame Greifvorrichtung 100 in Schnittansicht von vorne. Fig. 2 zeigt die Greifvorrichtung 100 in Schnittansicht von hinten. Die Greifvorrichtung 100 dient zur Anordnung an einem Robotergreifer, ist mithilfe eines Robotergreifers betätigbar und dient zum Aufnehmen, Halten und/oder Ablegen von Greifobjekten.

Die Greifvorrichtung 100 weist eine mechanische Betätigung, zwei mechanisch aktivierbare und/oder deaktivierbare Wirkabschnitte 102, 104 mit Permanentmagneten für Greifobjekte und ein Getriebe zum Wandeln einer mechanischen Betätigungsleistung auf.

Die mechanische Betätigung dient zum Anordnen der Greifvorrichtung 100 an einem Robotergreifer und zum Betätigen der Greifvorrichtung 100 mithilfe des Robotergreifers. Die mechanische Betätigung ist zweiseitig betätigbar und bei Betätigung selbsttätig zentrierend.

Die Greifvorrichtung 100 weist ein als Basis dienendes erstes Abstützelement 106 und ein als Hubelement dienendes zweites Abstützelement 108 auf, die zueinander hin und voneinander weg verlagerbar sind.

Die Greifvorrichtung 100 weist zwischen dem ersten Abstützelement 106 und dem zweiten Abstützelement 108 wirksame Hebel, wie 110, 112, auf. Die Hebel 110, 112 sind jeweils als Winkelhebel mit zwei Enden und einem Winkelabschnitt ausgeführt. Die Hebel 110, 112 sind jeweils mit ihrem Winkelabschnitt an dem zweiten Abstützelement 108 mithilfe eines Lagerstifts drehbar und ansonsten fest und mit einem Ende an dem ersten Abstützelement 106 lediglich abstützend lose gelagert.

Die Betätigung weist zwei linear geführte Kontaktelemente 114, 116 mit zumindest annähernd parallele Kontaktflächen für den Robotergreifer auf. Die Kontaktelemente 114, 116 sind jeweils mithilfe eines Drehschubgelenks an einem Ende eines Hebels 110, 112 angeordnet.

Die Greifvorrichtung 100 weist einen Abstreifer 118 auf. Der Abstreifer 118 weist eine ebene Unterseite mit Öffnungen für die Permanentmagnete auf. Die Permanentmagnete sind mit dem ersten Abstützelement 106 fest verbunden. Der Abstreifer 118 ist mit dem zweiten Abstützelement 108 fest verbunden.

Zum Greifen eines Greifobjekts greift ein Robotergreifer die Greifvorrichtung 100 an der Betätigung und bringt die Greifvorrichtung 100 mit ihrer Wirkabschnitten 102, 104 mit dem Greifobjekt in Wirkkontakt. Dann werden die Kontaktelemente 114, 116 mithilfe des Robotergreifers zueinander hin beaufschlagt. Dabei verschwenken die Hebel 110, 112, die Abstützelemente 106, 108 bewegen sich voneinander weg und die Permanentmagnete bewegen sich durch die Öffnungen des Abstreifers 118 aus der Unterseite heraus, sodass die Wirkabschnitte 102, 104 aktiviert werden. Zum Deaktivieren der Wirkabschnitte 102, 104 werden umgekehrt die Permanentmagnete wieder in die Öffnungen des Abstreifers 118 zurückgezogen, sodass ein Greifobjekt abgestriffen wird.

Die Greifvorrichtung 100 dient zum Kontakt mit einem robotischen Parallelgreifer zum Aufnehmen des Werkzeugs und beidseitigen symmetrischen aktuieren des Werkzeugs; Reibschluss und Formschluss, sowie Zentrierung. Eine Parallelführung dient zur Kraftübertragung an Hebel 110, 112 über Stift. Die Hebel 110, 112 dienen zur Kraftaufnahme und Weiterleitung der Kraft von den Kontaktelementen 114, 116 in das erste Abstützelement 106 über Loslager, die alternativ aber auch fixe Lager sein können. Loslager ermöglichen eine einfache Montage und Fertigung über Loslagerbuchsen in dem ersten Abstützelement 106. Eine Kraftrückführung bzw. Übertragung der Kraft erfolgt über Stifte in das zweite Abstützelement 108. Eine Kraft wird über ein Moment der Hebel 110, 112 erzeugt, welcher in Abhängigkeit des Winkels sinusförmig in das erste Abstützelement 106 übertragen werden, was bedeutet, dass theoretisch bei einem Winkel ca. 90° enorm hohe Kräfte übertragen werden können. Somit wird z.B. die linear ansteigende Kraft einer Feder ausgeglichen und Singularitäten ermöglicht. Das bedeutet, dass die Kraft auf den Abstreifer 118 auch ohne weitere Kraftübertragung durch den Greifvorrichtung 100 ermöglicht und gehalten wird.

Das zweite Abstützelement 108 wird durch ein Federelement (Gummi, Silikon, Metallfeder, etc.) in den Ausgangszustand zurückgezogen und führt auch die Hebel 110, 112 wieder in ihre Ausgangsposition zurück.

Ein Formschluss verbindet die Kontaktelemente 114, 116 und das zweite Abstützelement 108 miteinander, sodass die gesamte Greifvorrichtung 100 fixiert und stabilisiert wird.

Die Greifvorrichtung 100 ist ein mechanisch aktuiertes Magnetgreifsystem. Die Permanentmagnete sind endseitig an säulenförmigen fest verbundenen Abstandshaltern angeordnet. Das Zusammendrücken des Mechanismus führt zum Anheben des Abstreifers 118 und führt dazu, dass die Permanentmagnete nach unten herausschauen und somit metallische/magnetische Gegenstände greifen. Durch eine Feder, die z.B. zwischen den Abstandshaltern sitzt und das erste Abstützelement 106 und den Abstreifer 118 auseinanderdrück, wird der Abstreifer 118 nach unten bewegt. Das führt dazu, dass der Abstand zwischen den Permanentmagneten und magnetischem Objekt vergrößert wird und dadurch auch die Anziehungskraft gegen 0 geht. So kann durch zusammendrücken und aufgehen lassen ein magnetisches Objekt aufgenommen und wieder abgelegt werden.

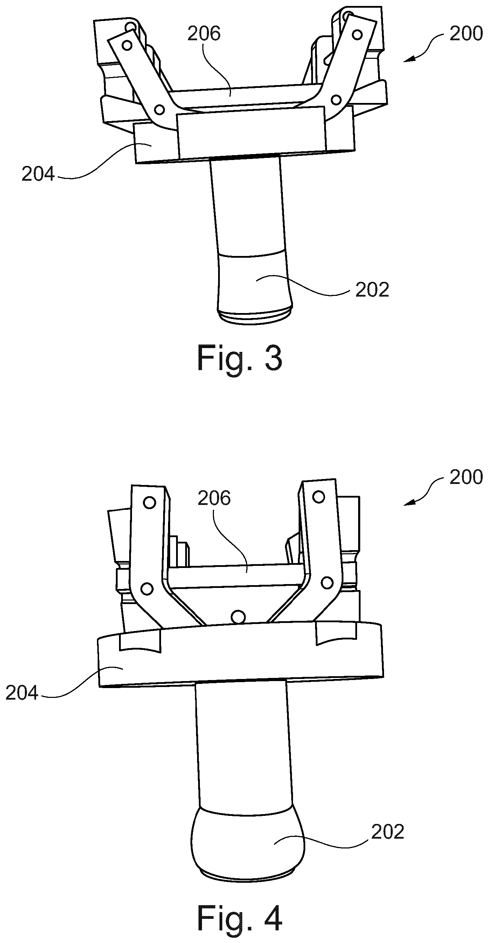

Fig. 3 zeigt eine als Innengreifer ausgeführte Greifvorrichtung 200 für einen Robotergreifer mit einem deaktivierten elastischen Wirkabschnitt 202. Fig. 4 zeigt die Greifvorrichtung 200 mit aktivierten elastischen Wirkabschnitt 202.

Wenn das erste Abstützelement 204 und das zweite Abstützelement 206, wie in Fig. 4 gezeigt, voneinander weg bewegt werden, wird der elastische Wirkabschnitt 202 axial zusammengedrückt und weicht radial aus, sodass sich eine Durchmesservergrößerung ergibt und der Wirkabschnitt 202 aktiviert ist, um beispielsweise eine Flasche zu greifen. Wenn das erste Abstützelement 204 und das zweite Abstützelement 206, wie in Fig. 3 gezeigt, zueinander hin bewegt werden, wird der elastische Wirkabschnitt 202 axial entspannt und der Durchmesser verkleinert sich wieder, sodass der Wirkabschnitt 202 deaktiviert ist. Im Übrigen wird ergänzend insbesondere auf Fig. 1 und Fig. 2 sowie die zugehörige Beschreibung verwiesen.

Durch die Betätigung des Mechanismus wird über eine Innenführung ein Silikon zusammengepresst. Dieses dehnt sich aus und ermöglicht es somit, z.B. Flaschen oder andere Bohrungen von innen zu greifen.

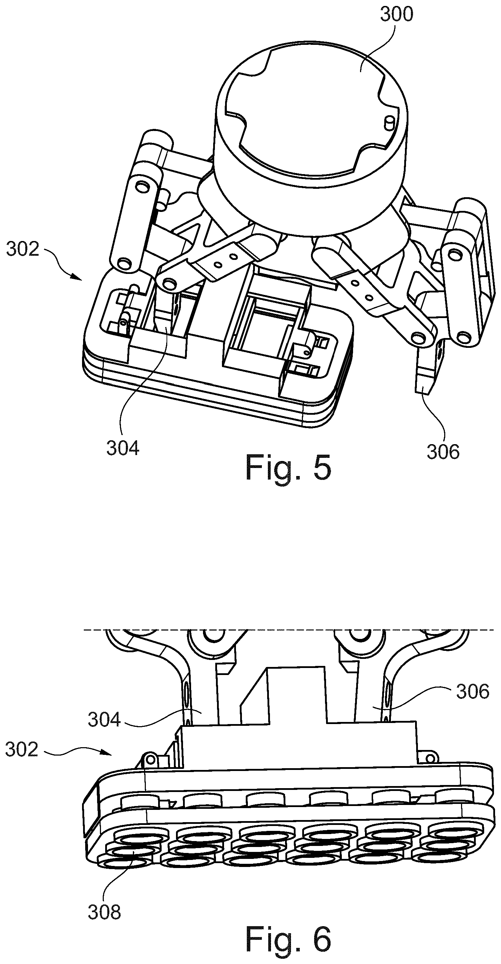

Fig. 5 zeigt einen Robotergreifer 300 und eine als Flächengreifer mit Saugelementen ausgeführte Greifvorrichtung 302 in Ansicht von oben. Fig. 6 zeigt den Robotergreifer 300 und die Greifvorrichtung 302 in Ansicht von unten.

Der Robotergreifer 300 dient als Effektor eines Roboters. Robotergreifer 300 ist ein Zweifingergreifer mit zwei Greiffingern 304, 306. Die Greiffinger 304, 306 wirken mit der Betätigung der Greifvorrichtung 302 zusammen.

Die Saugelemente sind in einer Ebene angeordnet und dienen als Wirkabschnitte, wie 308. Wenn das erste Abstützelement und das zweite Abstützelement voneinander weg bewegt werden, werden die Saugelemente evakuiert bzw. mit Unterdruck beaufschlagt und die Wirkabschnitte 308 aktiviert. Wenn das erste Abstützelement und das zweite Abstützelement zueinander hin bewegt werden, werden die Saugelemente wieder freigegeben und die Wirkabschnitt 308 deaktiviert. Im Übrigen wird ergänzend insbesondere auf Fig. 1 und Fig. 2 sowie die zugehörige Beschreibung verwiesen.

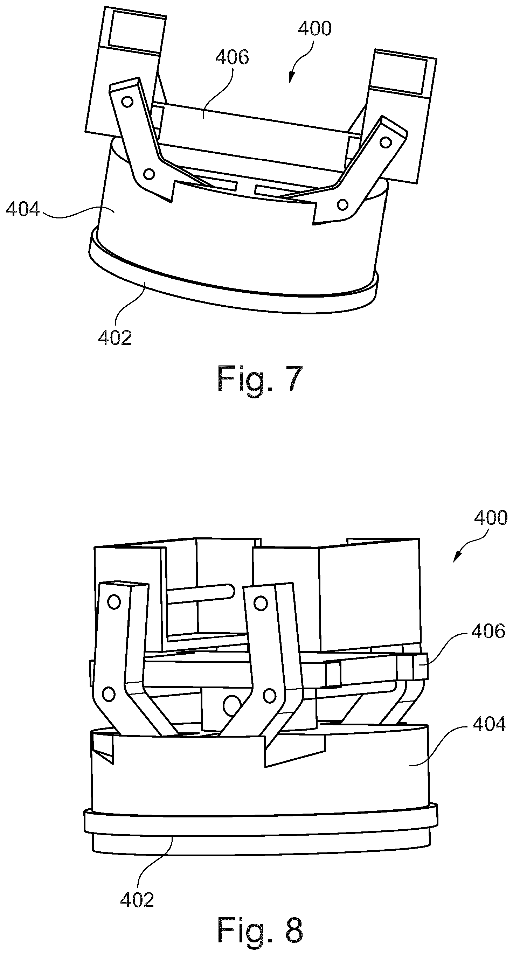

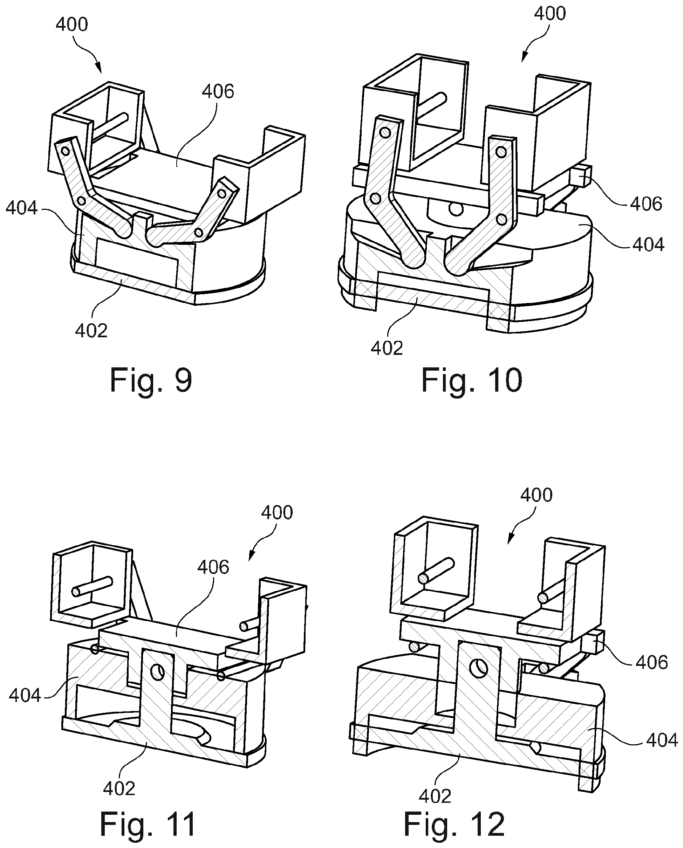

Fig. 7 zeigt eine als Saugheber ausgeführte Greifvorrichtung 400 für einen Robotergreifer mit deaktiviertem Wirkabschnitt 402. Fig. 8 zeigt die Greifvorrichtung 400 mit aktiviertem Wirkabschnitt 402. Fig. 9 zeigt die Greifvorrichtung 400 mit deaktiviertem Wirkabschnitt 402 in Schnittansicht. Fig. 10 zeigt die Greifvorrichtung 400 mit aktiviertem Wirkabschnitt 402 in Schnittansicht. Fig. 11 zeigt die Greifvorrichtung 400 mit deaktiviertem Wirkabschnitt 402 in einer weiteren Schnittansicht. Fig. 12 zeigt die Greifvorrichtung 400 mit aktiviertem Wirkabschnitt 402 in einer weiteren Schnittansicht.

Als Wirkabschnitt 402 dient ein Saugelement. Das Saugelement weist eine stempelartige Form auf und ist mit dem zweiten Abstützelement 406 fest verbunden. Wenn das erste Abstützelement 404 und das zweite Abstützelement 406 voneinander weg bewegt werden, wird das Saugelement evakuiert bzw. mit Unterdruck beaufschlagt und der Wirkabschnitt 402 aktiviert. Wenn das erste Abstützelement 404 und das zweite Abstützelement 406 zueinander hin bewegt werden, wird das Saugelement wieder freigegeben und der Wirkabschnitt 402 deaktiviert. Im Übrigen wird ergänzend insbesondere auf Fig. 1 und Fig. 2 sowie die zugehörige Beschreibung verwiesen.

Durch die Erweiterung eines an einem Roboter angebrachten Zweibackengreifers mit der Greifvorrichtung 400 kann beispielsweise eine Platte, die mit dem Zweibackengreifer nicht gegriffen werden kann, mit einem Saugelement transportiert, bzw. gehandhabt werden. Danach kann die Greifvorrichtung 400 wieder abgelegt werden.

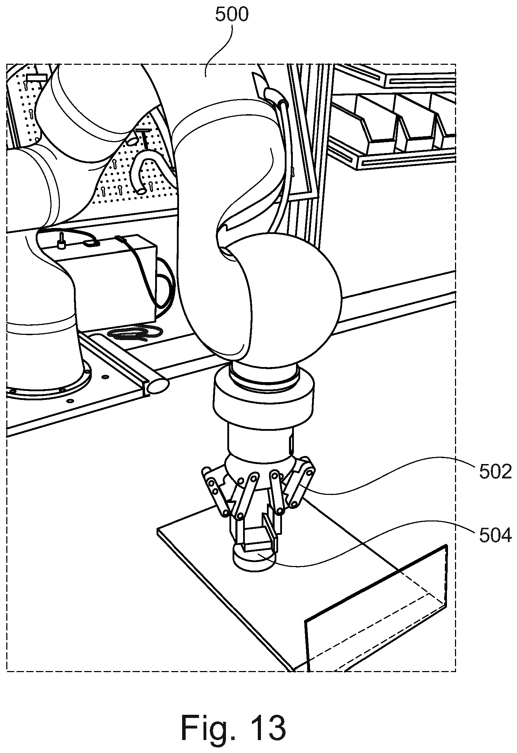

Fig. 13 zeigt einen Roboter 500 mit einem Robotergreifer 502 und einer als Saugheber ausgeführte Greifvorrichtung 504. Im Übrigen wird ergänzend insbesondere auf Fig. 1 und Fig. 2 sowie Fig. 7 bis Fig. 12 und die zugehörige Beschreibung verwiesen. Folgende Schritte können durchgeführt werden: Anfahren; Greifvorrichtung 504 greifen; Greifvorrichtung 504 aktuieren; Greifobjekt positionieren; Greifvorrichtung 504 wieder ablegen.

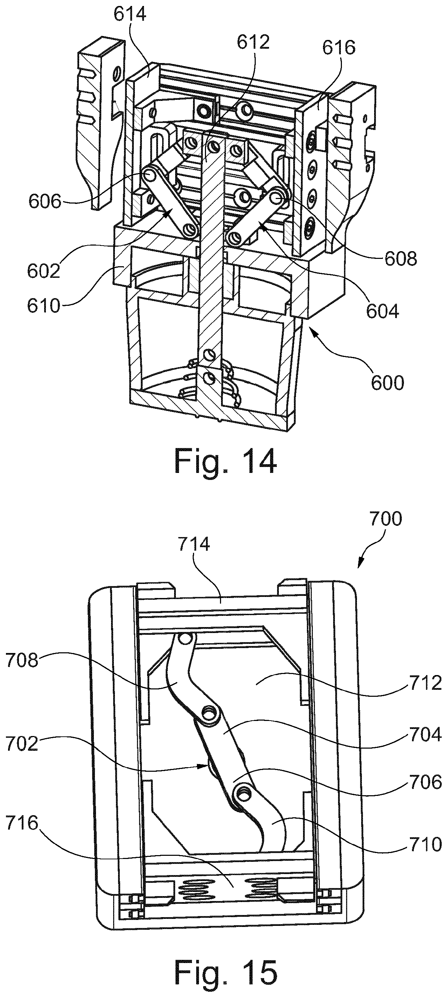

Fig. 14 zeigt eine Greifvorrichtung 600 mit zwei als Kniehebel ausgeführten mehrteiligen Hebeln 602, 604. Die Hebel 602, 604 weisen jeweils zwei miteinander stabförmige Schenkel auf. Die Schenkel sind jeweils miteinander mithilfe eines Drehgelenks 606, 608 verbunden. Die Hebel 602, 604 weisen jeweils ein erstes Ende, das mit dem ersten Abstützelement 610 gelenkig verbunden ist, und ein zweites Ende, das mit dem zweiten Abstützelement 612 gelenkig verbunden ist, auf. Die Kontaktelemente 614, 616 sind an dem ersten Abstützelement 610 in einer Betätigungsrichtung linear geführt. Die Drehgelenke 606, 608 weisen jeweils eine Drehachse auf, die an den Kontaktelementen 614, 616 in einer zur Betätigungsrichtung senkrechten Aktivierungs-/Deaktivierungsrichtung linear geführt sind. Im Übrigen wird ergänzend insbesondere auf Fig. 1, Fig. 2 und Fig. 7 bis Fig. 12 sowie die zugehörige Beschreibung verwiesen.

Fig. 15 zeigt eine Greifvorrichtung 700 mit einer Welle 702, Kurbeln 704, 706 und bogenförmigen Koppelgliedern 708, 710. Die Welle 702 ist an einer Basis 712 drehbar gelagert. Die Kurbeln 704, 706 sind fest an der Welle 702 angeordnet. Die Koppelglieder 708, 710 sind jeweils einerseits mit einer Kurbel 704, 706 und andererseits mit einem Kontaktelement 714, 716 gelenkig verbunden. Die Kontaktelemente 714, 716 sind an der Basis 712 in einer Betätigungsrichtung linear geführt. Das Getriebe wandelt eine lineare Bewegung der Kontaktelemente 714, 716 in eine rotatorische Aktivierungs-/Deaktivierungsbewegung. Im Übrigen wird ergänzend insbesondere auf Fig. 1 und Fig. 2 sowie die zugehörige Beschreibung verwiesen.

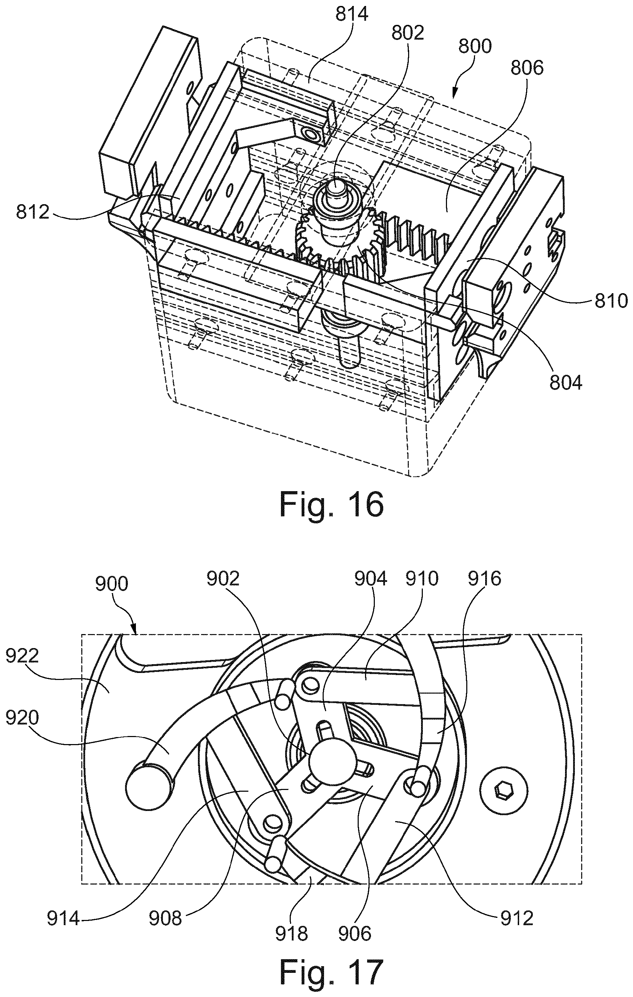

Fig. 16 zeigt eine Greifvorrichtung 800 mit einer Welle 802 und einer Verzahnung. Die Verzahnung ist mithilfe eines Zahnrads 804, das mit der Welle 802 fest verbunden ist, und zwei Zahnstangen, wie 806, die jeweils mit einem Kontaktelement 810, 812 fest verbunden sind, gebildet. Die Kontaktelemente 810, 812 sind an der Basis 814 in einer Betätigungsrichtung linear geführt. Das Getriebe wandelt eine lineare Bewegung der Kontaktelemente 810, 812 in eine rotatorische Aktivierungs-/Deaktivierungsbewegung. Im Übrigen wird ergänzend insbesondere auf Fig. 1 und Fig. 2 sowie die zugehörige Beschreibung verwiesen.

Fig. 17 zeigt eine Greifvorrichtung 900 mit einer Welle 902, Kurbeln 904, 906, 908, Koppelgliedern 910, 912, 914 und Hebeln 916, 918, 920. Die Welle 902 ist an einer Basis 922 drehbar gelagert. Die Kurbeln 904, 906, 908 sind fest an der Welle 902 angeordnet. Die Koppelglieder 910, 912, 914 sind jeweils einerseits mit eine Kurbel 904, 906, 908 und andererseits mit einem Hebeln 916, 918, 920 gelenkig verbunden. Das Getriebe wandelt eine rotatorische Aktivierungs-/Deaktivierungsbewegung in Spreizbewegung. Im Übrigen wird ergänzend insbesondere auf Fig. 1, Fig. 2 und Fig. 16 sowie die zugehörige Beschreibung verwiesen.

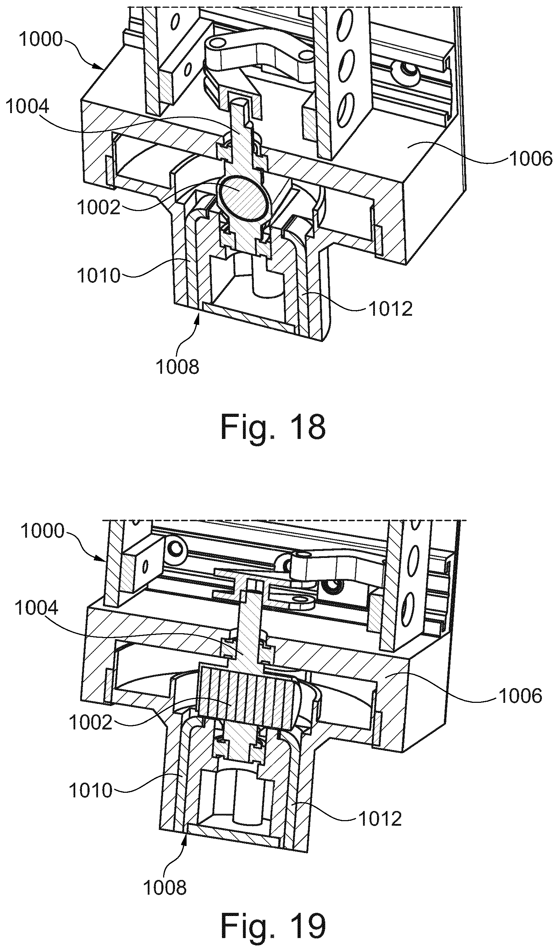

Fig. 18 zeigt eine Greifvorrichtung 1000 mit einer verdrehbaren Magnetanordnung 1002 in Deaktivposition. Fig. 19 zeigt die Greifvorrichtung 1000 in Aktivposition. Die Greifvorrichtung 1000 weist eine Welle 1004 auf, die an einer Basis 1006 drehbar gelagert ist. Die Magnetanordnung 1002 ist fest an der Welle 1004 angeordnet und weist stapelförmig angeordnete Permanentmagnete auf. Zwischen dem Wirkabschnitt 1008 und der Magnetanordnung 1002 sind Magnetfeldleitelemente 1010, 1012 angeordnet. In der Aktivposition wird ein Magnetfeld der Magnetanordnung 1002 über die Magnetfeldleitelemente 1010, 1012 zu dem Wirkabschnitt 1008 geleitet. In der Deaktivposition ist das Magnetfeld der Magnetanordnung 1002 von den Magnetfeldleitelementen 1010, 1012 entkoppelt und ihr Magnetfeld wird mithilfe ferromagnetischer Elemente umgeleitet, sodass der Wirkabschnitt 1008 magnetkraftfrei ist.

Mit "kann" sind insbesondere optionale Merkmale der Erfindung bezeichnet. Demzufolge gibt es auch Weiterbildungen und/oder Ausführungsbeispiele der Erfindung, die zusätzlich oder alternativ das jeweilige Merkmal oder die jeweiligen Merkmale aufweisen.

Aus den vorliegend offenbarten Merkmalskombinationen können bedarfsweise auch isolierte Merkmale herausgegriffen und unter Auflösung eines zwischen den Merkmalen gegebenenfalls bestehenden strukturellen und/oder funktionellen Zusammenhangs in Kombination mit anderen Merkmalen zur Abgrenzung des Anspruchsgegenstands verwendet werden.

### Bezugszeichen

- 100: Greifvorrichtung
- 102: Wirkabschnitt
- 104: Wirkabschnitt
- 106: erstes Abstützelement
- 108: zweites Abstützelement
- 110: Hebel
- 112: Hebel
- 114: Kontaktelement
- 116: Kontaktelement
- 118: Abstreifer

- 200: Greifvorrichtung
- 202: Wirkabschnitt
- 204: erstes Abstützelement
- 206: zweites Abstützelement

- 300: Robotergreifer
- 302: Greifvorrichtung
- 304: Greiffinger
- 306: Greiffinger
- 308: Wirkabschnitt

- 400: Greifvorrichtung
- 402: Wirkabschnitt
- 404: erstes Abstützelement
- 406: zweites Abstützelement

- 500: Roboter
- 502: Robotergreifer
- 504: Greifvorrichtung

- 600: Greifvorrichtung
- 602: Hebel
- 604: Hebel
- 606: Drehgelenk
- 608: Drehgelenk
- 610: erstes Abstützelement
- 612: zweites Abstützelement
- 614: Kontaktelement
- 616: Kontaktelement

- 700: Greifvorrichtung
- 702: Welle
- 704: Kurbel
- 706: Kurbel
- 708: Koppelglied
- 710: Koppelglied
- 712: Basis
- 714: Kontaktelement
- 716: Kontaktelement

- 800: Greifvorrichtung
- 802: Welle
- 804: Zahnrad
- 806: Zahnstange
- 810: Kontaktelement
- 812: Kontaktelement
- 814: Basis

- 900: Greifvorrichtung
- 902: Welle
- 904: Kurbel
- 906: Kurbel

- 908: Kurbel
- 910: Koppelglied
- 912: Koppelglied
- 914: Koppelglied
- 916: Hebel
- 918: Hebel
- 920: Hebel
- 922: Basis

- 1000: Greifvorrichtung
- 1002: Magnetanordnung
- 1004: Welle
- 1006: Basis
- 1008: Wirkabschnitt
- 1010: Magnetfeldleitelement
- 1012: Magnetfeldleitelement

## Patentansprüche

1. Greifvorrichtung (100, 200, 302, 400, 504, 600) für einen Robotergreifer (300, 502) mit wenigstens zwei in einer Greifer-Öffnungs-/Schließrichtung relativ zueinander verlagerbaren Greifabschnitten, die Greifvorrichtung (100, 200, 302, 400, 504, 600) aufweisend eine mechanische Betätigung mit wenigstens zwei in einer Betätigungsrichtung parallel linear geführten Kontaktelementen (114, 116, 614, 616), wenigstens einen mechanisch aktivierbaren und/oder deaktivierbaren Wirkabschnitt (102, 104, 202, 308, 402) für Greifobjekte und ein Getriebe mit wenigstens zwei Hebeln (110, 112, 606, 608) zum Wandeln einer mechanischen Betätigungsleistung,wobei die Kontaktelemente (114, 116, 614, 616) mithilfe der Greifabschnitte des Robotergreifers (300, 502) mit einer Betätigungsbewegung und/oder Betätigungskraft beaufschlagbar sind und die wenigstens zwei Kontaktelemente (114, 116, 614, 616) einerseits und die wenigstens zwei Hebel (110, 112, 606, 608) andererseits jeweils miteinander mit einem Freiheitsgrad f=2 gelenkig verbunden sind.

2. Greifvorrichtung (100, 200, 302, 400, 504, 600) nach Anspruch 1, **dadurch gekennzeichnet, dass** die wenigstens zwei Kontaktelemente (114, 116, 614, 616) einerseits und die wenigstens zwei Hebel (110, 112, 606, 608) andererseits jeweils miteinander mithilfe eines Drehschubgelenks verbunden sind.

3. Greifvorrichtung (100, 200, 302, 400, 504, 600) nach wenigstens einem der vorhergehenden Ansprüche, **dadurch gekennzeichnet, dass** die Greifvorrichtung (100, 200, 302, 400, 504, 600) relativ zueinander verlagerbar ein erstes Abstützelement (106, 204, 404, 610) und ein zweites Abstützelement (108, 206, 406, 612) aufweist, und die wenigstens zwei Hebel (110, 112, 606, 608) jeweils unmittelbar an dem ersten Abstützelement (106, 204, 404, 610) und unmittelbar an dem zweiten Abstützelement (108, 206, 406, 612) abgestützt sind.

4. Greifvorrichtung (100, 200, 302, 400, 504) nach wenigstens einem der vorhergehenden Ansprüche, **dadurch gekennzeichnet, dass** die wenigstens zwei Hebel (110, 112) mit dem zweiten Abstützelement (108, 206, 406) jeweils mit einem Freiheitsgrad f=2 gelenkig verbunden sind.

5. Greifvorrichtung (100, 200, 302, 400, 504, 600) nach wenigstens einem der vorhergehenden Ansprüche, **dadurch gekennzeichnet, dass** die wenigstens zwei Hebel (110, 112, 606, 608, 916, 918, 920) jeweils einteilig oder mehrteilig ausgeführt sind.

6. Greifvorrichtung (700, 800, 900, 1000) für einen Robotergreifer (300, 502) mit wenigstens zwei in einer Greifer-Öffnungs-/Schließrichtung relativ zueinander verlagerbaren Greifabschnitten, die Greifvorrichtung (700, 800, 900, 1000) aufweisend eine mechanische Betätigung mit wenigstens zwei in einer Betätigungsrichtung parallel linear geführten Kontaktelementen (714, 716, 810, 812), wenigstens einen mechanisch aktivierbaren und/oder deaktivierbaren Wirkabschnitt (1008) für Greifobjekte und ein Getriebe zum Wandeln einer mechanischen Betätigungsleistung, wobei die Kontaktelemente (714, 716, 810, 812) mithilfe der Greifabschnitte des Robotergreifers (300, 502) mit einer Betätigungsbewegung und/oder Betätigungskraft beaufschlagbar sind, und das Getriebe eine Welle (702, 802, 902, 1004) zum Übertragen einer Drehbewegung und/oder eines Drehmoments aufweist.

7. Greifvorrichtung (700, 900, 1000) nach Anspruch 6, **dadurch gekennzeichnet, dass** das Getriebe an der Welle (702, 902, 1004) angeordnete Kurbeln (704, 706, 904, 906, 908) und mit den Kurbeln (704, 706, 904, 906, 908) gelenkig verbundene Koppelglieder (708, 710, 910, 912, 914) aufweist.

8. Greifvorrichtung (800) nach wenigstens einem der Ansprüche 6 bis 7, **dadurch gekennzeichnet, dass** das Getriebe wenigstens eine Verzahnung aufweist.

9. Greifvorrichtung (100, 200, 302, 400, 504, 600, 700, 800, 900, 1000) nach wenigstens einem der vorhergehenden Ansprüche, **dadurch gekennzeichnet, dass** der wenigstens eine Wirkabschnitt (102, 104, 202, 308, 402, 1008) mechanisch formschlüssig, mechanisch kraftschlüssig, pneumatisch, magnetisch und/oder adhäsiv wirksam ist.

10. Greifvorrichtung (100, 200, 302, 400, 504, 600, 700, 800, 900, 1000) nach wenigstens einem der vorhergehenden Ansprüche, **dadurch gekennzeichnet, dass** der wenigstens eine Wirkabschnitt (102, 104, 202, 308, 402, 1008) wenigstens einen Permanentmagnet, wenigstens ein Elastikelement und/oder wenigstens ein Saugelement aufweist.

11. Greifvorrichtung (100, 200, 302, 400, 504, 600, 700, 800, 900, 1000) nach wenigstens einem der vorhergehenden Ansprüche, **dadurch gekennzeichnet, dass** die Greifvorrichtung (100, 200, 302, 400, 504, 600, 700, 800, 900, 1000) als Flächengreifer, als Einzelgreifer, als Innengreifer oder als Außengreifer ausgeführt ist.

12. Greifvorrichtung (100, 200, 302, 400, 504, 600) nach wenigstens einem der vorhergehenden Ansprüche, **dadurch gekennzeichnet, dass** die Greifvorrichtung (100, 200, 302, 400, 504, 600) eine zwischen dem ersten Abstützelement (106, 204, 404, 610) und dem zweiten Abstützelement (108, 206, 406, 612) wirksame Federvorrichtung aufweist.

13. Verfahren zum Betreiben einer Greifvorrichtung (100, 200, 302, 400, 504, 600, 700, 800, 900, 1000) nach wenigstens einem der vorhergehenden Ansprüche, **dadurch gekennzeichnet, dass** eine Greifvorrichtung (100, 200, 302, 400, 504, 600, 700, 800, 900, 1000) zunächst ausgewählt, nachfolgend von einer vorbestimmten Position aufgenommen, nachfolgend verwendet und nachfolgend an einer vorbestimmten Position abgelegt wird.

14. Verfahren nach Anspruch 13, **dadurch gekennzeichnet, dass** anhand einer Betätigungskraft ein Greifzustand beurteilt wird.

## Claims

1. Gripping device (100, 200, 302, 400, 504, 600) for a robot gripper (300, 502) with at least two gripping sections that can be moved relative to each other in a gripper opening/closing direction, the gripping device (100, 200, 302, 400, 504, 600) comprising a mechanical actuator with at least two contact elements (114, 116, 614, 616) guided linearly in parallel in an actuating direction, at least one mechanically activatable and/or deactivatable functional section (102, 104, 202, 308, 402) for gripping objects, and a gear mechanism with at least two levers (110, 112, 606, 608) for converting a mechanical actuation force, wherein the contact elements (114, 116, 614, 616) can be acted upon by the gripping sections of the robot gripper (300, 502) with an actuating movement and/or actuating force, and the at least two contact elements (114, 116, 614, 616) on the one hand and the at least two levers (110, 112, 606, 608) on the other hand are each jointedly connected to each other with a degree of freedom f=2.

2. Gripping device (100, 200, 302, 400, 504, 600) according to claim 1, **characterized in that** the at least two contact elements (114, 116, 614, 616) on the one hand and the at least two levers (110, 112, 606, 608) on the other hand are each connected to each other by means of a rotary-sliding joint.

3. Gripping device (100, 200, 302, 400, 504, 600) according to at least one of the preceding claims, **characterized in that** the gripping device (100, 200, 302, 400, 504, 600) has a first support element (106, 204, 404, 610) and a second support element (108, 206, 406, 612) that can be moved relative to each other, and the at least two levers (110, 112, 606, 608) are each supported directly on the first support element (106, 204, 404, 610) and directly on the second support element (108, 206, 406, 612).

4. Gripping device (100, 200, 302, 400, 504) according to at least one of the preceding claims, **characterized in that** the at least two levers (110, 112) are each jointedly connected to the second support element (108, 206, 406) with a degree of freedom f=2.

5. Greifvorrichtung (100, 200, 302, 400, 504, 600) nach wenigstens einem der vorhergehenden Ansprüche, **dadurch gekennzeichnet, dass** die wenigstens zwei Hebel (110, 112, 606, 608, 916, 918, 920) jeweils einteilig oder mehrteilig ausgeführt sind.

6. Gripping device (700, 800, 900, 1000) for a robot gripper (300, 502) with at least two gripping sections that can be moved relative to each other in a gripper opening/closing direction, the gripping device (700, 800, 900, 1000) comprising a mechanical actuator with at least two contact elements (714, 716, 810, 812) guided linearly in parallel in an actuating direction, at least one mechanically activatable and/or deactivatable functional section (1008) for gripping objects, and a gear for converting a mechanical actuating power, wherein the contact elements (714, 716, 810, 812) can be acted upon by the gripping sections of the robot gripper (300, 502) with an actuating movement and/or actuating force, and the gear has a shaft (702, 802, 902, 1004) for transmitting a rotary movement and/or torque.

7. Gripping device (700, 900, 1000) according to claim 6, **characterized in that** the gear comprises cranks (704, 706, 904, 906, 908) arranged on the shaft (702, 902, 1004) and coupling members (708, 710, 910, 912, 914) jointedly connected to the cranks (704, 706, 904, 906, 908).

8. Gripping device (800) according to at least one of claims 6 to 7, **characterized in that** the gear has at least one toothing.

9. Gripping device (100, 200, 302, 400, 504, 600, 700, 800, 900, 1000) according to at least one of the preceding claims, **characterized in that** the at least one functional section (102, 104, 202, 308, 402, 1008) is mechanically form-fittingly, mechanically force-fittingly, pneumatically, magnetically, and/or adhesively effective.

10. Gripping device (100, 200, 302, 400, 504, 600, 700, 800, 900, 1000) according to at least one of the preceding claims, **characterized in that** the at least one functional section (102, 104, 202, 308, 402, 1008) has at least one permanent magnet, at least one elastic element, and/or at least one suction element.

11. Gripping device (100, 200, 302, 400, 504, 600, 700, 800, 900, 1000) according to at least one of the preceding claims, **characterized in that** the gripping device (100, 200, 302, 400, 504, 600, 700, 800, 900, 1000) is designed as a surface gripper, a single gripper, an internal gripper, or an external gripper.

12. Gripping device (100, 200, 302, 400, 504, 600) according to at least one of the preceding claims, **characterized in that** the gripping device (100, 200, 302, 400, 504, 600) has a spring device that acts between the first support element (106, 204, 404, 610) and the second support element (108, 206, 406, 612).

13. Method for operating a gripping device (100, 200, 302, 400, 504, 600, 700, 800, 900, 1000) according to at least one of the preceding claims, **characterized in that** a gripping device (100, 200, 302, 400, 504, 600, 700, 800, 900, 1000) is first selected, then picked up from a predetermined position, then used, and then deposited at a predetermined position.

14. Method according to claim 13, **characterized in that** a gripping state is assessed on the basis of an actuating force.

## Revendications

1. Dispositif de préhension (100, 200, 302, 400, 504, 600) pour une pince robotisée (300, 502) comportant au moins deux sections de préhension pouvant être déplacées l'une par rapport à l'autre dans une direction d'ouverture/fermeture de la pince, le dispositif de préhension (100, 200, 302, 400, 504, 600) comprenant un actionnement mécanique avec au moins deux éléments de contact (114, 116, 614, 616) guidés de manière linéaire parallèlement dans une direction d'actionnement, au moins une section active (102, 104, 202, 308, 402) pouvant être activée et/ou désactivée mécaniquement pour des objets à saisir et une boîte de vitesses avec au moins deux leviers (110, 112, 606, 608) pour convertir une puissance d'actionnement mécanique, les éléments de contact (114, 116, 614, 616) peuvent être soumis à un mouvement d'actionnement et/ou à une force d'actionnement à l'aide des sections de préhension de la pince robotisée (300, 502) et les au moins deux éléments de contact (114, 116, 614, 616) d'une part et les au moins deux leviers (110, 112, 606, 608) d'autre part sont reliés de manière articulée les uns aux autres avec un degré de liberté f=2.

2. Dispositif de préhension (100, 200, 302, 400, 504, 600) selon la revendication 1, **caractérisé en ce que** les au moins deux éléments de contact (114, 116, 614, 616) d'une part et les au moins deux leviers (110, 112, 606, 608) d'autre part sont reliés entre eux à l'aide d'une articulation pivotante et coulissante.

3. Dispositif de préhension (100, 200, 302, 400, 504, 600) selon au moins l'une des revendications précédentes, **caractérisé en ce que** le dispositif de préhension (100, 200, 302, 400, 504, 600) comprend un premier élément d'appui (106, 204, 404, 610) et un deuxième élément d'appui (108, 206, 406, 612) pouvant être déplacés l'un par rapport à l'autre, et les au moins deux leviers (110, 112, 606, 608) sont respectivement soutenus directement par le premier élément d'appui (106, 204, 404, 610) et directement par le deuxième élément d'appui (108, 206, 406, 612).

4. Dispositif de préhension (100, 200, 302, 400, 504) selon au moins l'une des revendications précédentes, **caractérisé en ce que** les au moins deux leviers (110, 112) sont reliés de manière articulée au deuxième élément d'appui (108, 206, 406) avec un degré de liberté f=2.

5. Dispositif de préhension (100, 200, 302, 400, 504, 600) selon au moins l'une des revendications précédentes, **caractérisé en ce que** les au moins deux leviers (110, 112, 606, 608, 916, 918, 920) sont chacun réalisés en une seule pièce ou en plusieurs pièces.

6. Dispositif de préhension (700, 800, 900, 1000) pour une pince robotisée (300, 502) comportant au moins deux sections de préhension pouvant être déplacées l'une par rapport à l'autre dans une direction d'ouverture/fermeture de la pince, le dispositif de préhension (700, 800, 900, 1000) comprenant un actionnement mécanique avec au moins deux éléments de contact (714, 716, 810, 812) guidés linéairement en parallèle dans une direction d'actionnement, au moins une section active (1008) pouvant être activée et/ou désactivée mécaniquement pour des objets à préhension et une boîte de vitesses pour convertir une puissance d'actionnement mécanique, les éléments de contact (714, 716, 810, 812) peuvent être soumis à un mouvement d'actionnement et/ou à une force d'actionnement à l'aide des sections de préhension de la pince robotisée (300, 502) et que la boîte de vitesses comporte un arbre (702, 802, 902, 1004) pour transmettre un mouvement de rotation et/ou un couple.

7. Dispositif de préhension (700, 900, 1000) selon la revendication 6, **caractérisé en ce que** la boîte de vitesses comprend des manivelles (704, 706, 904, 906, 908) disposées sur l'arbre (702, 902, 1004) et des éléments de couplage (708, 710, 910, 912, 914) reliés de manière articulée aux manivelles (704, 706, 904, 906, 908).

8. Dispositif de préhension (800) selon au moins l'une des revendications 6 à 7, **caractérisé en ce que** la boîte de vitesses comporte au moins une dentur.

9. Dispositif de préhension (100, 200, 302, 400, 504, 600, 700, 800, 900, 1000) selon au moins l'une des revendications précédentes, **caractérisé en ce que** la au moins une partie active (102, 104, 202, 308, 402, 1008) agit par complémentarité de forme mécanique, par adhérence mécanique, par pression pneumatique, par magnétisme et/ou par adhérence.

10. Dispositif de préhension (100, 200, 302, 400, 504, 600, 700, 800, 900, 1000) selon au moins l'une des revendications précédentes, **caractérisé en ce que** la au moins une section active (102, 104, 202, 308, 402, 1008) comprend au moins un aimant permanent, au moins un élément élastique et/ou au moins un élément d'aspiration.

11. Dispositif de préhension (100, 200, 302, 400, 504, 600, 700, 800, 900, 1000) selon au moins l'une des revendications précédentes, **caractérisé en ce que** le dispositif de préhension (100, 200, 302, 400, 504, 600, 700, 800, 900, 1000) est conçu comme une pince à surface, une pince simple, une pince intérieure ou une pince extérieure.

12. Dispositif de préhension (100, 200, 302, 400, 504, 600) selon au moins l'une des revendications précédentes, **caractérisé en ce que** le dispositif de préhension (100, 200, 302, 400, 504, 600) comprend un dispositif à ressort agissant entre le premier élément d'appui (106, 204, 404, 610) et le deuxième élément d'appui (108, 206, 406, 612).

13. Procédé pour faire fonctionner un dispositif de préhension (100, 200, 302, 400, 504, 600, 700, 800, 900, 1000) selon au moins l'une des revendications précédentes, **caractérisé en ce qu'**un dispositif de préhension (100, 200, 302, 400, 504, 600, 700, 800, 900, 1000) est d'abord sélectionné, puis prélevé à partir d'une position prédéterminée, puis utilisé et enfin déposé à une position prédéterminée.

14. Procédé selon la revendication 13, **caractérisé en ce qu'**un état de préhension est évalué à l'aide d'une force d'actionnement.
